Europäisches Patentamt

European Patent Office

Office européen des brevets

(19)

(11) Veröffentlichungsnummer: **0 187 880 B1**

(12) **EUROPÄISCHE PATENTSCHRIFT**

(45) Veröffentlichungstag der Patentschrift: **06.11.91**

(21) Anmeldenummer: 85100369.9

(22) Anmeldetag: **16.01.85**

(51) Int. Cl.5: **B01J 47/00**, B01D 61/42, C02F 1/42

(54) **Verfahren und Vorrichtung zum Behandeln von Flüssigkeiten, insbesondere Entsalzen wässriger Lösungen.**

(43) Veröffentlichungstag der Anmeldung:
23.07.86 Patentblatt 86/30

(45) Bekanntmachung des Hinweises auf die Patenterteilung:
06.11.91 Patentblatt 91/45

(84) Benannte Vertragsstaaten:
AT BE CH DE FR GB IT LI NL SE

(56) Entgegenhaltungen:
EP-A- 0 113 387
GB-A- 776 469
US-A- 3 869 376

(73) Patentinhaber: EDR Acquisition Corporation
34 Imperial Avenue
Westport Connecticut 06880-4304(US)

(72) Erfinder: Kunz, Gerhard, Dipl.-Chem. Dr. Ing.
Ruhrstrasse 111
W-5628 Heiligenhaus(DE)

(74) Vertreter: Merten, Fritz
Tristanstrasse 5
W-8500 Nürnberg 40(DE)

Rank Xerox (UK) Business Services

# Beschreibung

Die Erfindung bezieht sich auf ein Verfahren und eine Vorrichtung zum Behandeln von Flüssigkeiten, insbesondere Entsalzen wäßriger Lösungen, bei dem die Flüssigkeit und die in ihr gelösten Ionen in Hintereinanderfolge unterschiedlichen Absorptions- und Desorptionsvorgängen ausgesetzt wird, und diese Flüssigkeit nach dem Ablauf dieser Vorgänge als behandeltes Produkt anfällt.

Es ist allgemein bekannt, daß Flüssigkeiten, insbesondere wäßrige Lösungen, wie Wasser aller Art, für den industriellen Bedarf bei vielen Anwendungsfällen praktisch frei von Salz bzw. deren ionogenen Dissoziationskomponenten sein müssen. Zu diesem Zweck werden für die Aufbereitung solcher Flüssigkeiten diverse Verfahren angewendet, die allgemein bekannt sind und durch die solche in Flüssigkeiten gelöste Salze entfernt werden. **Aus der EP 0 113 387 A1** ist ferner bekannt, daß mittels von Elektrodenräumen ausgehender Ionenströme die aus der Flüssigkeit stammenden gelösten Ionenkomponenten der gelösten Salze, welche an Austauscherschichten absorbiert wurden, verdrängt werden können und somit einen Entsalzungseffekt ergeben. Durch derartige Verdrängerionenströme wird der elektrische Widerstand des Systems und damit die notwendige treibende elektrische Spannung auch bei sehr hohen Entsalzungseffekten, also nur noch geringen Restsalzkonzentrationen, niedrig gehalten. Es hat sich jedoch gezeigt, daß bei derartig hohen Entsalzungseffekten der Stromwirkungsgrad, also die Umsetzung des elektrischen in das chemische Äquivalent, immer niedriger wird, da auch für die Verdrängung geringer Mengen ionogener Salzkomponenten relativ hohe Verdrängerionenströme benötigt werden.

**Z. B. aus der GB 776 469 A ist ein** Verfahren bekannt, wonach die Ionenkomponenten der in der Flüssigkeit gelösten Salze nach Absorption an gemischten Austauscherharzen im elektrischen Feld direkt an die Elektroden geleitet werden, wobei ein Teilstrom der zu entsalzenden Flüssigkeit zum Spülen der Elektroden verwendet wird. Die Nachteile dieses Verfahrens bestehen vor allem darin, daß an der Anode die flüchtigen Ionenkomponenten, insbesondere Chloride, entladen werden und das extrem korrosive und toxische Chlorgas freisetzen. Dies erfolgt umso mehr, je höher die zu entfernende Salzmenge ist.

Es ist ferner bekannt, daß die aus dem Mischbett herauswandernden ionogenen Komponenten in zwischen Mischbett und Elektroden zusätzlich angeordneten Austauschermassen aufgenommen werden können, die parallel von Spülströmen durchflossen werden und wobei die Elektroden von einem dritten Flüssigkeitsstrom umspült werden, der für die Anoden und Kathoden aus derselben Versorgungsleitung stammt, als von derselben Art ist. Dies bedeutet, daß nicht nur drei Abwasserströme in entsprechender Menge und mit den entsprechenden Wärmeverlusten anfallen, sondern daß diese Vielzahl von Abwasserströmen auch geregelt und dem gesamten Verfahrensablauf angepaßt werden müssen. Es kommt ferner als Nachteil hinzu, daß die von den Elektroden abwandernden Ionen durch die zwischen Mischbett und Elektrodenkammern angeordneten Austauschermassen in ihrer Wanderung behindert werden, da diese Austauschermassen als zu den wandernden Ionen entgegengesetzt geladene Sperrgitter wirken, was sich als hoher elektrischer Widerstand und somit als hoher elektrischer Energieverbrauch auswirkt.

Ein weiterer Nachteil dieser bekannten Desorptionsverfahren ist, daß eine aus Anionen- und Kationenaustauschermassen vermischte Absorptionsschicht einen hohen elektrischen Widerstand hat, da der Weg der einzelnen Ionensorten bei ihrer Desorption und Wanderung im elektrischen Feld ständig von entgegengesetzt geladenen und damit sperrenden Austauscherkugeln blockiert wird. Alle Nachteile dieser Verfahren werden umso gravierender, je höher die beaufschlagte und zu entfernende Salzmenge ist.

Es wurde nun gefunden, daß der Energieverbrauch dann am niedrigsten ist, wenn nur die nach dem Verdrängungsverfahren arbeitende Entsalzung mit hohen Salzgehalten in der zu entsalzenden Flüssigkeit, also der Rohflüssigkeit, z. B. Rohwasser, beaufschlagt wird und die Restsalzgehalte relativ hoch bleiben, also nur eine Teilentsalzung ausgeführt wird. Bei den nach der Desorptionsmethode arbeitenden Verfahren hat sich gezeigt, daß der Energieverbrauch dann optimal niedrig ist, bei gleichzeitiger Entsalzung auf sehr niedrige Restsalzgehalte, also sehr guter Produktqualität, wenn die Beaufschlagung nur mit niedrigen Salzkonzentrationen in der zu entsalzenden Flüssigkeit erfolgt und wenn für die jeweiligen Ionenarten ein unbehinderter Weg für ihre Wanderung zur Verfügung gestellt wird.

Hier setzt die Erfindung ein, der die Aufgabe zugrunde liegt, wäßrige Lösungen ohne Verwendung von Regenerierchemikalien zu entsalzen, dabei mittels Ionenverdrängung hohe Salzgehalte in der zu entsalzenden Lösung zu reduzieren und den noch verbleibenden Restsalzgehalt mittels Desorption (Ionenabwanderung) aus unbehinderten Absorptionsschichten praktisch vollständig zu eliminieren und den Energieverbrauch in beiden Entsalzungsstufen optimal niedrig zu halten, dabei nur einen einzigen Abwasserstrom zu verwenden und die beiden Teilschritte des Entsalzungsverfahrens durch die Anordnung von Grenzschichten und Absorptionsmedien sowie Elektrodenräumen zu einem Gesamtentsalzungsverfahren zu koppeln, dessen elektischer Widerstand und somit auch dessen Gesamtenergieverbrauch besonders niedrig ist, und die Vorrichtung zur Durchführung des Verfahrens in einem weiten Bereich variabler Salzkonzentrationen und variabler durchsätze praktikabel und betriebssicher auszuführen und dabei die Produktqualität und die Ausstoßleistung über eine lange Betriebszeit konstant zu erhalten.

Diese Aufgabe wird mit den im kennzeichnenden Teil des Hauptanspruches genannten Merkmalen gelöst. Vorteilhafte Ausführungen sind in den Unteransprüchen umfasst.

Durch diese Maßnahmen der absorptiven und desorptiven Verdrängung eines großen Teiles der ionogenen Salzkomponenten aus der zu entsalzenden Flüssigkeit durch im Kreuzstrom dazu im elektrischen Feld wandernden, von den Elektroden ausgehenden Ionenströmen in einen Soleraum und durch eine Desorption der ionogenen Restkomponenten aus der zu entsalzenden Flüssigkeit in einer mit Kationen- und Anionenaustauschermasse geschichtet gefüllten Desorptionskammer mittels eines Spannungspotentials in eine zugeordnete Solekammer und eine Kathodenkammer und eine in Reihe durchgeführte Ausschleusung der aufkonzentrierten Sole wird die der Erfindung zugrunde liegende Aufgabe nicht nur vorteilhaft gelöst, sondern es wird auch eine Reihe energetischer, verfahrenstechnischer, apparativer und wirtschaftlicher Vorteile erreicht. Diese Vorteile sind im einzelnen:

a) Die Einleitung der, die ganze Salzmenge enthaltenden, zu entsalzenden Flüssigkeit in die Verdrängerkammern und der von den Elektroden und den Elektrodenkammern her in die zu behandelnde Flüssigkeit einwandernde Ionenstrom bewirkt einen geringen elektrischen Widerstand für die wandernden ionogenen Salzkomponenten, wodurch für den Transport des größten Anteiles der Salzmenge eine besonders niedrige elektrische Spannung ausreicht. Der Stromwirkungsgrad, also die Umsetzung des elektrischen in das chemische Äquivalent, bleibt bei hohen Werten, weil die Menge der Verdrängerionenströme nur auf eine Teilentsalzung eingestellt wird. Aus beiden Maßnahmen resultiert der Vorteil, daß für die Eliminierung des größten Salzanteiles aus der zu entsalzenden Flüssigkeit, beispielsweise 95 %, der Energieverbrauch, in den bekannterweise elektrische Spannung und Stromstärke eingehen, besonders niedrig.

b) Die Einleitung der noch eine Restsalzmenge enthaltenden Flüssigkeit in eine Desorptionskammer bewirkt mittels eines elektrischen Potentials die praktisch vollständige Entfernung des Restsalzgehaltes und damit die Produktion hochgradig gereinigter Flüssigkeit.

c) Ein Vorteil des erfindungsgemäßen Verfahrens ist, daß durch die Schichtung von Kationen- und Anionenaustauschermassen in der Desorptionskammer sowohl für die kationischen als auch für die anionischen Salzkomponenten der zu entsalzenden Flüssigkeit unbehinderte Wanderung ermöglicht wird, wofür eine niedrige elektrische Spannung ausreicht und sich mithin ein sehr niedriger Energieverbrauch auch bei extrem guter Reinigungswirkung ergibt.

d) Ein weiterer Vorteil der Erfindung ist, daß die aus der Desorptionskammer stammenden, aufkonzentrierten Solemengen der Solekammer zwischen den Verdrängerkammern zugeführt werden und dort zu einer Herabsetzung des elektrischen Widerstandes und somit zu einer Herabsetzung des Energieverbrauches für die Entfernung des größten Teiles der Salzmenge aus der zu entsalzenden Flüssigkeit beitragen.

e) Ein besonderer Vorteil des erfindungsgemäßen Verfahrens ist, daß die Ausschleusung sowohl der Restsalzmenge, stammend aus der Desorptionskammer, als auch der Hauptsalzmenge, stammend aus den Verdrängerkammern, in einem einzigen Solestrom erfolgt. Dieser Vorteil wirk sich in mehrfacher Hinsicht aus: Die Abwassermenge, bezogen auf die eliminierte Salzmenge, bzw. auf das Produkt, also die gereinigte Flüssigkeit, ist sehr niedrig und damit die Abwassermengenbelastung der Vorfluter und der Verbrauch an Rohwasser, z. B. bei der Wasseraufbereitung, wird, verglichen mit den bisher bekannten Verfahren, besonders niedrig.

Durch den Anfall geringer Abwassermengen sind die Wärmeverluste des Gesamtsystems geringer bzw. eine Wärmerückgewinnung aus dem Abwasser wird weniger aufwendig.

Durch die Verwendung nur eines einzigen Abwasserstromes wird die Regelung und Anpassung der Salzabführung an die Funktion des Gesamtverfahrens wesentlich einfacher und leichter zu handhaben und die apparative Ausführung wird erheblich kostengünstiger.

f) Durch das unbehinderte Einleiten der von der Anode abwandernden Ionen in die der Desorptionskammer zugeordneten Solekammer und das direkte Einleiten der desorbierenden kationischen Salzkomponenten aus der Desorptionskammer in die zugeordnete Kathodenkammer wird der elektrische Widerstand in der Desorptionsstufe und damit die notwendige treibende elektrische Spannung, damit schließlich der Energieverbrauch erheblich abgesenkt.

g) Ein weiterer Vorteil des erfindungsgemäßen Verfahrens stellt die Anordnung einer Solekammer zwischen Desorptionskammer und Anodenkammer dar, wodurch die Entladung flüchtiger anionischer Salzkomponenten an der Anode und damit die Entstehung korrosiver und toxischer Effekte verhindert wird.

h) Ein Vorteil insbesondere für die apparative Ausführung ergibt sich dadurch, daß sowohl der Verdrängerionenkreuzstrom für die Entsalzung in der kationischen Verdrängerkammer als auch das Spannungspotential für die Eliminierung des Restsalzgehaltes von ein und derselben Anode erzeugt wird, was zu einer deutlichen Verminderung der Herstellkosten der erfindungsgemäßen Vorrichtung führt.

Weitere vorteilhafte Weiterbildungen der Erfindung in verfahrens- und auch vorrichtungsspezifischer Hinsicht können den verbleibenden Unteransprüchen entnommen werden.

In den Zeichnungen ist ein Ausführungsbeispiel der Erfindung, ohne sie auf dieses allein zu beschränken, schematisch dargestellt. Es zeigt:

Fig. 1    einen Längsmittelschnitt durch eine Vorrichtung gemäß der Erfindung in der Ebene I - I in Fig. 2, bei der in einem Gefäß zwei Verdrängerkammern mit einer dazwischen liegenden Solekammer und eine Desorptionskammer mit der zugehörigen Solekammer, sowie eine den Verdrängerkammern und der Desorptionskammer zugeordnete gemeinsame Anodenkammer wie auch jeweils eine zugeordnete Kathodenkammer gezeigt sind.

Fig. 2    einen Querschnitt durch die Vorrichtung in der Ebene II - II in Fig. 1.

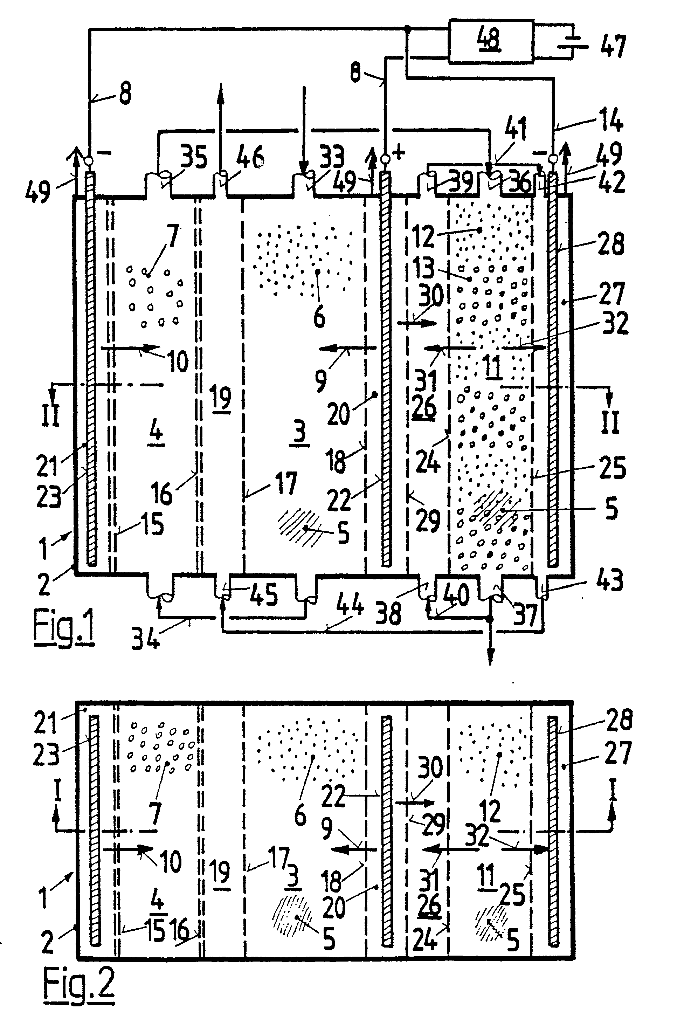

Die Vorrichtung 1 gemäß der Erfindung wird entsprechend der Darstellung in Fig. 1 und Fig. 2 im wesentlichen von einem Gefäß 2 für in diesem vorgesehene Verdrängerkammern 3 und 4, in denen Absorptions- und Desorptionsvorgänge zwischen einer zu behandelnden Flüssigkeit 5, Ionenaustauschermassen 6, 7 und solchen von Elektroden 8 ausgehenden Ionenströmen 9, 10 ablaufen, und für in diesem ferner vorgesehene Desorptionskammer 11, in der Desorptionsvorgänge zwischen der weiter zu behandelnden Flüssigkeit 5, und den Ionenaustauschermassen 12, 13 in einem zwischen der Elektrode 14 und einer der Elektroden 8 gebildeten Spannungsfeld ablaufen, gebildet. Die Verdrängerkammern 3 und 4, von denen im Gefäß 2 mindestens eine Verdrängerkammer 3 für die Strömung der Kationen 9 und eine weitere Verdrängerkammer 4 für die Strömung der Anionen 10 vorgesehen ist, sind mit je einer Ionenaustauschermasse 6, 7 gefüllt, welche von der zu behandelnden Flüssigkeit 5 hintereinander durchflossen werden. Die Verdrängerkammern 3,4 , die seitlich von Grenzschichten in Form von Ionenaustauschermembranen 15 bis 18 begrenzt werden, sind bei Anordnung je einer Verdrängerkammer, z. B. 3, für Kationen 9 und einer solchen Verdrängerkammer, z. B.

4, für Anionen 10 zwischen einer gemeinsamen Solekammer 19 und einer jeweiligen Elektrodenkammer 20, 21 angeordnet, wobei an die Verdrängerkammer 3 für die Kationen 9 die Elektrodenkammer 20 der Anode 22 und an die Verdrängerkammer 4 der Anionen 10 die Elektrodenkammer 21 der Kathode 23 angrenzt. Die Ionenaustauschermembranen 15 bis 18 zwischen den Kammern 3,4 und 20, 21 sind derart ausgebildet, daß sie jeweils den Ionenstrom 9, 10 in die jeweilige Verdrängerkammer 3, 4 und aus dieser in die Solekammer 19 passieren lassen, den Durchtritt einer Flüssigkeit 5 wie auch den Durchtritt der eine andere Ladung aufweisenden Ionen hingegen sperren. Dabei werden unter dem jeweiligen Ionenstrom 9, 10 in der Verdrängerkammer 3 für die Kationen 9 die von der Anode 22 in der Anodenkammer 20 erzeugten Wasserstoffionen und unter dem Ionenstrom 10 in der Verdrängerkammer 4 für Anionen die von der Kathode 23 in der Kathodenkammer 21 erzeugten Hydroxylionen verstanden. Die Desorptionskammer 11, von der im Gefäß 2 mindestens eine angeordnet ist, ist in geschichteter Form mit Ionenaustauschermassen 12, 13 gefüllt, welche von der zu behandelnden Flüssigkeit 5 nacheinander durchflossen werden. Die Desorptionskammer 11, die seitlich von Grenzschichten in Form von Ionenaustauschermembranen 24, 25 begrenzt wird, ist zwischen einer Solekammer 26 und einer Kathodenkammer 27 für die Kathode 28 angeordnet, wobei an die Solekammer 26 die Anodenkammer 20 für die Anode 22 anschließt und diese Solekammer 26 von der Anodenkammer 20 durch eine Grenzschicht in Form einer Ionenaustauschermembran 29 abgegrenzt wird. Die Ionenaustauschermembranen 24, 25, 29 zwischen den Kammern 20, 26, 11 und 27 sind derart ausgebildet, daß sie jeweils einen Ionenstrom 30, 31 in die Solekammer 26 und einen Ionenstrom 32 in die Kathodenkammer 27 passieren lassen, den Durchtritt von Flüssigkeiten, z. B. 5, wie auch den Durchtritt der eine andere Ladung aufweisenden Ionen hingegen sperren. Dabei werden unter dem jeweiligen Ionenstrom 30, 31 für die Solekammer 26 und dem Ionenstrom 32 für die Kathodenkammer 27 für die Kationen 30 die an der Anode 22 in der Anodenkammer 20 erzeugten Wasserstoffionen, unter dem Ionenstrom 31 die aus der Desorptionskammer 11 in die Solekammer 26 abwandernden Anionen und unter dem Ionenstrom 32 die aus der Desorptionskammer 11 in die Kathodenkammer 27 abwandernden Kationen verstanden.

Die Vorrichtung 1 ist dabei so konzipiert, daß in die Verdrängerkammer 3 für Kationen 9 eine Zuführungsleitung 33 für die zu behandelnde Flüssigkeit 5, z. B. oben, einmündet und diese Kammer über eine an dieser Verdrängerkammer unten angeschlossenen Abführungsleitung und eine Verbin-

dungsleitung 34, z. B. von unten, mit der Verdrängerkammer 4 für Anionen 10 verbunden ist. Am oberen Ende dieser Verdrängerkammer 4 für Anionen 10 ist eine Ablaufleitung 35 angeschlossen, über die die in den Verdrängerkammern 3, 4 behandelte Flüssigkeit 5 durch den, z. B. oben, angeordneten Zulauf 36 in die Desorptionskammer 11 zur weiteren Behandlung geleitet wird. Am unteren Ende dieser Desorptionskammer 11 ist eine sogenannte Produktleitung 37 angeschlossen, über die die behandelte Flüssigkeit 5 abfließen kann. Die Solekammer 26, welche seitlich von den Ionenaustauschermembranen 24, 29 zum einen gegen die Desorptionskammer 11 und zum anderen gegen die Anodenkammer 20 abgetrennt ist, ist mit einer Zu- und Abführungsleitung 38, 39 versehen, von denen die Zuleitung zum Zwecke eines Einbringens einer Transportflüssigkeit in diese Solekammer 26 über eine Verbindungsleitung 40 an der Produktleitung 37 für die behandelte Flüssigkeit angeschlossen ist. Die Abführungsleitung 39 ist über eine Verbindungsleitung 41 an dem, beispielsweise oben angebrachten, Zulauf 42 der Kathodenkammer 27 angeschlossen, um die aus der Solekammer 26 ablaufende Transportflüssigkeit in die Kathodenkammer 27 einzubringen. Am unteren Ende der Kathodenkammer 27 befindet sich eine Ableitung 43, die mittels einer Verbindungsleitung 44 an einem Zulauf 45 der Solekammer 19 zum Zwecke des Einbringens der aus der Kathodenkammer 27 abfließenden Transportflüssigkeit angeschlossen ist. Die Solekammer 19, welche seitlich von den Ionenaustauschermembranen 16, 17 zum einen gegen die Verdrängerkammer 3 für Kationen 9 und zum anderen gegen die Verdrängerkammer 4 für die Anionen 10 abgetrennt ist, ist mit einer Abführungsleitung 46 versehen, die mit einer in der Zeichnung nicht dargestellten Soleentsorgung verbunden ist. Die in den Elektrodenkammern 20, 21, 27 einmündenden Elektroden 22, 23, 28 sind an einer Stromversorgung 47 einer Gleichstromquelle unter Zwischenschaltung mindestens eines Regel- und Meßkreises 48 angeschlossen. Bei den elektrochemischen Vorgängen an allen Elektroden 22, 23, 28 entstehen Elektrolytgase, die durch Entlüfter 49 aus der Vorrichtung 1 abgeleitet werden.

Die Behandlung der Flüssigkeit 5 bzw. die Entsalzung des Rohwassers wird nach dem erfindungsgemäßen Verfahren in einer Vor- und einer Nachbehandlung durchgeführt, wobei die einzelnen Behandlungen in mehreren Teilschritten erfolgen. In der Anodenkammer 20 der Ausführung der Vorrichtung nach Fig. 1 und Fig. 2 befindet sich verdünnte Schwefelsäure, die in bekannter Weise als sich nicht verbrauchendes Medium die Wasserstoffionenbildung an der Anode 22 ermöglicht. Entsprechend einer an den Elektroden 22, 23 einerseits und an den Elektroden 22, 28 andererseits angelegten Gleichspannung und entsprechend den jeweiligen elektrischen Widerständen zwischen den Elektroden, fließen die an den Amperemetern eines Regel- und Meßkreises 48 ablesbaren elektrischen Ströme, wobei der elektrische Stromfluß zwischen den Elektroden 22, 23 der Vorbehandlung und der elektrische Stromfluß zwischen den Elektroden 22, 28 der Nachbehandlung der Flüssigkeit 5 dient. Dem elektrischen Strom zwischen den Elektroden 22, 23 äquivalent bewegt sich in der Verdrängerkammer 3, ausgehend von der Anodenkammer 20, ein Wasserstoffionenstrom 9 in die Reichtung der Solekammer 19. Er kreuzt dabei den Strom der Flüssigkeit 5 bzw. die in ihm enthaltenen ionogenen Salzkomponenten, die sich in der zu behandelnden Flüssigkeit 5 von oben nach unten durch die Austauschermasse 6 der Verdrängerkammer 3 bewegen. Es stellen sich dabei Absorptions- und Desorptionsvorgänge nach den Gleichgewichten zwischen den Konzentrationen der Ionenarten einerseits in der wäßrigen und andererseits in der Austauscherphase ein. Als treibende Differenz für die Bewegung aller Ionen fungiert vertikal die Flüssigkeitsströmung und horizontal die elektrische Spannung. Im Verlauf dieser Bewegungen werden die kationischen Salzkomponenten der zu behandelnden Flüssigkeit 5 durch die Wasserstoffionen des Ionenstroms 9 zur Solezelle 19 hin verdrängt und sind schließlich die neuen Partner der anionischen Salzkomponenten der zu behandelnden Flüssigkeit 5. Der Wasserstoffionenstrom 9 wird dabei mittels Variation des auf die Elektroden 22, 23 aufgegebenen elektrischen Spannungspotentials in seiner Menge so eingestellt, daß nicht alle, vorzugsweise nur 90 - 95 % aller kationischen Salzkomponenten, verdrängt werden, was den Überschußanteil an Wasserstoffionen 9 und mithin die aufzuwendende äquivalente elektrische Strommenge zwischen den Elektroden 22, 23 niedrig bzw. den Stromausnutzungsgrad hoch hält. Der gleiche Effekt wird erzielt, wenn nicht das elektrische Spannungspotential der Elektroden 22, 23, sondern die Durchflußmenge der zu behandelnden Flüssigkeit 5 variiert wird.

Die aus der Verdrängerkammer 3 ablaufende und zum größten Teil von kationischen Salzkomponenten befreite Flüssigkeit 5 wird durch die Verbindungsleitung 34 in die Verdrängerkammer 3, 4 eingeleitet, wo sie von dem Ionenstrom 10 gekreuzt wird. Dieser Ionenstrom 10 besteht aus Hydroxylionen, die im Kathodenraum 21, der zur Förderung der Bildungsreaktion mit verdünnter Natronlauge gefüllt ist, an der Kathode 23 entstehen und mengenmäßig dem elektrischen Strom zwischen den Elektroden 22, 23 äquivalent sind und sich in der Verdrängerkammer 4 in die Richtung der Solekammer 19 bewegen. Analog den Vorgängen in der Verdrängerkammer 3 stellen sich auch in der Verdrängerkammer 4 Absorptions- und Desorptionsvorgänge nach den Gleichgewichten zwischen den Konzentrationen der Ionenarten einerseits in der wäßrigen und andererseits in der von der Flüssigkeit 5 durchströmten Anionenaustauscherphase 7 ein, wobei auch hier als treibende Differenz für die Bewegung der Ionen vertikal die Flüssigkeitsströmung und horizontal die elektrische Spannung fungiert. Im Verlauf dieser Vorgänge werden die anionischen Salzkomponenten der zu behandelnden Flüssigkeit 5 durch die Hydroxylionen des Ionenstroms 10 zur Solezelle 19 hin verdrängt und wobei die Hydroxylionen mit den in der Verdrängerkammer 3 eingewanderten und sich noch in der Flüssigkeit 5 befindenden Wasserstoffionen Wasser bilden. Der Hydroxylionenstrom 10 ist äquivalent der elektrischen Strommenge zwischen den Elektroden 22, 23 und verdrängt, entsprechend der eingestellten kationischen Verdrängung, ebenfalls beispielsweise nur 90 - 95 % aller anionischen Salzkomponenten aus der Flüssigkeit 5, wobei sich ein hoher Stromausnutzungsgrad ergibt.

Da die Beweglichkeit der Wasserstoffionen 9 größer ist als die der Hydroxylionen 10, ist ihre Konzentration und damit ihre Wirkung auf die gewünschte Verdrängung der kationischen Salzkomponenten geringer. Dies wird erfindungsgemäß durch eine längere Verweilzeit ausgeglichen, d. h. durch eine breiter angeordnete Verdrängerkammer 3 im Vergleich zu der anionischen Verdrängerkammer 4, wie dies in Fig. 1 und Fig. 2 dargestellt ist.

Es hat sich ferner gezeigt, daß die Sperrwirkung der Ionenaustauschermembranen nicht vollständig ist. In der Praxis zeigt sich eine Durchlässigkeit für Gegenionen, d. h. Ionen entgegengesetzter Ladung, bis zu etwa 2 % der zu sperrenden Ionenkonzentration. Dies würde zu einem unerwünschten Einwandern von Kationen in die Verdrängerkammer 4 führen. Erfindungsgemäß wird daher diese anionische Verdrängungskammer 4, die in der Vorbehandlungsstufe zuletzt durchflossen wird, von dickeren oder doppelten Membranen 15, 16 begrenzt, wie in Fig. 1 und Fig. 2 dargestellt.

Die aus der Verdrängerkammer 4 ablaufende und zum größten Teil entsalzte Flüssigkeit 5 wird durch die Ablaufleitung 35 und den Zulauf 36 zur Nachbehandlung in die Desorptionskammer 11 geleitet. Entsprechend einer an den Elektroden 22, 28 angelegten Gleichspannung und entsprechend dem elektrischen Widerstand zwischen diesen Elektroden fließt ein elektrischer Strom und ein diesem äquivalenter Ionenstrom 30, bestehend aus Wasserstoffionen, die an der Anode 29 gebildet werden, ausgehend von der Anodenkammer 20 durch die kationendurchlässige Membran 29 hindurch in die Solekammer 26. Gleichzeitig bewegen sich die anionischen Restsalzkomponenten der Flüssigkeit 5 beim Durchströmen der Austauscherschichten 12, 13 durch die elektrisch gut leitenden Anionenaustauscherschichten 13 und die anionendurchlässige Membran 24 in die Solekammer 26 und die kationischen Restsalzkomponenten bewegen sich durch die ebenfalls elektrisch gut leitenden Kationenaustauscherschichten 12 und die kationendurchlässige Membran 25 in die Kathodenkammer 27. Als treibende Differenz für die Desorption und die Wanderung beider Ionenarten fungiert die elektrische Potentialdifferenz an den Elektroden 22, 28. Im Verlauf der Strömung der zu behandelnden Flüssigkeit 5 durch die mehrfach angeordneten Austauscherschichten 12, 13 wiederholen sich die beschriebenen Vorgänge in jeder Austauscherschicht, wobei die kationischen Restsalzkomponenten nur durch die Kationenaustauschermassen 12 und die anionischen nur durch die Anionenaustauschermassen 13 alternierend desorbiert werden und dadurch für die Bewegung und Entfernung ein unbehinderter Weg geringen elektrischen Widerstandes zur Verfügung gestellt wird. Durch die Ablaufleitung 37 der Desorptionskammer 11 verläßt die behandelte Flüssigkeit 5 als sogenanntes Produkt praktisch salzfrei die Vorrichtung 1.

Zum Zwecke der Soleausspülung wird ein Teilstrom der behandelten Flüssigkeit 5 durch die Leitung 40 und den Zulauf 38 der Solekammer 26 zugeführt und durchströmt diese von unten nach oben, wobei die anionischen Restsalzkomponenten, die aus der zu behandelnden Flüssigkeit 5 beim Durchströmen der Desorptionskammer 11 desorbiert sind, und die sie elektrisch kompensierenden Wasserstoffionen 30 aus der Solekammer 26 durch den Ablauf 39 ausgespült und durch die Verbindungsleitung 41 und durch den Zulauf 42 der Kathodenkammer 27 zugeführt werden. Die an der Kathode 28 auf Grund der angelegten Gleichspannung in bekannter Weise gebildeten Hydroxylionen bilden mit den Wasserstoffionen 30, die mit der Spülflüssigkeit aus der Solekammer 26 in die Kathodenkammer 27 eingebracht wurden, spontan Wasser, während die durch die gleiche Spülflüssigkeit eingebrachten anionischen Restsalzkomponenten durch den aus der Desorptionskammer 11 durch die kationendurchlässige Membran 25 hindurch einwandernden Kationenstrom 32, der aus kationischen Restsalzkomponenten besteht, elektrisch kompensiert. Die auf diese Weise in der Kathodenkammer 27 entstandene Sole wird durch den Ablauf 43 der Kathodenkammer 27, durch die Verbindungsleitung 44 und durch den Zulauf 45 zum Zwecke der Solespülung in die Solekammer 19 eingeleitet und somit durch diese erneute Verwendung als Spülflüssigkeit bestmöglich ausgenutzt. In der Solekammer 19 strömt die bereits den Restsalzgehalt aus der nachbehandelten Flüssigkeit 5 enthaltende Spülflüssigkeit von unten nach oben und nimmt dabei die anionischen und kationischen Salzkomponenten, die aus den Verdrängerkammern 3, 4 heraus und in die Solekammer 19 hineingedrängt wurden, auf, und reichert ihren Salzgehalt weiter an. Durch die Ablaufleitung 46 der Solekammer 19 verläßt die nun hoch angereicherte Sole die Vorrichtung 1 und gelangt in eine nicht gezeichnete Soleentsorgung. Kalkulationen der Materialbilanzen haben gezeigt, daß diese Wiederverwendung der Spülflüssigkeit eine bedeutende Steigerung der Wirtschaftlichkeit des erfindungsgemäßen Entsalzungsverfahrens bewirkt.

**Patentansprüche**

1.  Verfahren zum Behandeln von Flüssigkeiten,

    insbesondere Entsalzen wässriger Lösungen,

    bei dem die Flüssigkeit in Hintereinanderfolge unterschiedlichen Absorptionsvorgängen für kationische und anionische Salzkomponenten ausgesetzt wird,

    wobei im Bereich der Absorptionsvorgänge der Flüssigkeit, bzw. der in ihr gelösten ionogenen Salzkomponenten, in von dieser getrennten Anoden- und Kathodenräumen (20, 21) Ionen erzeugt und diese jeweils in je einem Kreuzstrom (Verdrängerionenstrom) zu der den jeweiligen Absorptionsvorgang passierenden Flüssigkeit in diese eindiffundiert werden,

    wobei zum Diffundieren bzw. Bewegen der Ionenströme durch die Absorptionsvorgänge der Flüssigkeit ein elektrisches Spannungsfeld, insbesondere in Form eines Spannungspotentials angelegt ist,

    und daß diese Ionenströme auf ihrem Weg zum jeweiligen Absorptionsvorgang (Verdrängungsvorgang) je eine diesen Vorgang gegen einen Elektrodenraum abschirmende erste Membran (15, 18), wie auch eine im jeweiligen Absorptionsvorgang eingebrachte

    Ionenaustauschermasse (6, 7) passieren und in dieser Masse eine Ionenverschiebung (Ionenverdrängung) in der Art bewirken, daß sie die in dem jeweiligen Absorptionsvorgang sich befindenden Ionen aus der Flüssigkeitsphase und der Ionenaustauscherphase im Kreuzstrom zur Richtung der Flüssigkeitsströmung je zu zweiten Membranen (16, 17) fördern, von denen die eine Membran (16) die Zone der Kationenabsorption und die andere Membran (17) die Zone der Anionenabsorption gegen einen Absorptionsvorgängen aus Ka-

    tionenaustauscherphase und Anionenaustauscherphase gemeinsamen Solekammer trennen,

    und daß diese aus der Flüssigkeitsphase und der Ionenaustauscherphase abwandernden Ionen die jeweilige die Solekammer (15) gegen den jeweiligen Absorptionsvorgang trennende Membran (16, 17) durchdringen,

    hingegen diese Ionen nach Erreichen der Solekammer (19) von der jeweiligen, den andersartigen und diesen Ionen fremden Absorptionsvorgang abschirmenden zweiten Membran (16, 17) in der Solekammer (19) zurückgehalten werden,

    dadurch gekennzeichnet,

    daß die zu entsalzende Flüssigkeit einer Vorbehandlung zur Teilentsalzung mittels elektrischer Ionenverdrängung (Absorption)

    und einer Nachbehandlung zur Vollentsalzung mittels elektrischer Desorption unterworfen wird

    und daß beide Behandlungen zu einem Verfahren verbunden sind,

    wobei in der Vorbehandlung die in den Elektrodenräumen (20, 21) erzeugten Anionen und Kationen und die von ihnen gebildeten Kreuzströme mittels des elektrischen Spannungspotentials variiert und begrenzt werden und nur ein Anteil der ionogenen Salzkomponenten der zu entsalzenden Flüssigkeit (5) in die Solekammer (19) verdrängt wird,

    und daß die noch weiter zu entsalzende Flüssigkeit einer Desorptionskammer (11) zugeführt wird, in der sie erneut insbesondere Desorptionsvorgängen unterworfen wird,

    wobei diese Desorptionskammer (11) aus alternierenden Zonen geschichteter Kationen- (12) und Anionenaustauschermassen (13) aufgebaut ist,

    in denen die ionogenen Salzkomponenten des Restsalzgehaltes der zu behandelnden Flüssigkeit (5) absorbiert und mittels eines elektrischen Feldes, das zwischen Elektrodenräumen (20, 27) und zugehörigen Elektroden (22, 28) in Form eines Spannungspotentials erzeugt wird, desorbiert werden,

    wobei als einer der Elektrodenräume der der Vorbehandlung zugeordnete Anodenraum (20) mit zugehöriger Anode (22) für die Erzeugung der Verdrängerionenströme (30) mitbenutzt wird

und mit der Desorptionskammer (11) eine dazwischenliegende, der Desorptionskammer (11) zugeordnete Solekammer (26) bildet,

wobei dieser Anodenraum (20) zur Solekammer (26) durch eine kationendurchlässige und **anionensperrende Membran (29) und die Solekammer zur Desorptionskammer (11) durch eine anionendurchlässige und kationensperrende Membran (24)** begrenzt ist

und wobei an der Anode (22) im Anodenraum (20) zusätzlich zum Verdrängerionenstrom (9) ein weiterer Inonenstrom (30) erzeugt wird

und dieser Ionenstrom (30) durch die kationendurchlässige Membran (29) in die, der Desorptionskammer (11) zugeordnete Solekammer (26) eindiffundiert wird

und wobei als zweiter Elektrodenraum ein Kathodenraum (27) mit zugehöriger Kathode (28) der Desorptionskammer (11) zugeordnet und von dieser durch eine kationendurchlässige und anionensperrende Membran (25) abgegrenzt ist

und daß eine Spülflüssigkeit in Reihe zuerst die der Desorptionskammer zugeordnete Solekammer (26), dann den der Desorptionszone zugeordneten Kathodenraum (27) und dann die den Absorptions- und Desorptionsvorgängen (Verdrängerkammern) der Vorbehandlung gemeinsame zentrale Solekammer (19) durchströmt,

und dabei die aus der behandelten Flüssigkeit stammenden ionogenen Salzkomponenten sowohl aus dem Bereich der Nachbehandlung durch Desorption, als auch aus dem Bereich der Vorbehandlung durch Ionenverdrängung Absorption) in Form eines einzigen gemeinsamen Solestroms ausgespült werden.

2. Verfahren nach Anspruch 1, dadurch gekennzeichnet, daß der Grad der Verdrängung der sich in der Flüssigkeit und den Ionenaustauschermassen befindenden kationischen und anionischen Salzkomponenten durch Variation eines auf die Elektroden zur Erzeugung von Ionen einwirkenden elektrischen Spannungspotentials und dadurch ausgelöster Ionenströme quer zur Richtung der Flüssigkeitsströmung bewirkt wird, und daß diese Verdrängung kontinuierlich erfolgt.

3. Verfahren nach Anspruch 2, dadurch gekennzeichnet, daß der Grad der Verdrängung der sich in der Flüssigkeit und den Ionenaustauschermassen befindenden kationischen und anionischen Salzkomponenten in Abhängigkeit von der Stömungsmenge (Durchsatzleistung pro Zeiteinheit) der zu behandelnden Flüssigkeit und der Konzentration bzw. der Salzmenge der in dieser Flüssigkeit sich befindenden Ionen, wie auch der sich in der behandelten Flüssigkeit befindenden Restkonzentration der Ionen regelbar ist.

4. Verfahren nach Anspruch 1, dadurch gekennzeichnet, daß die Elektroden der Vorbehandlungsstufe und die Elektroden der Nachbehandlungsstufe an einer gemeinsamen Stromversorgung angeschlossen sind.

5. Verfahren nach Anspruch 1, dadurch gekennzeichnet, daß, insbesondere zur besseren Ausnutzung der Ionenströme, den von den Elektroden erzeugten, beweglicheren Ionen (z. B. Wasserstoffionen der Anode) ein längerer Verdrängungsweg durch den jeweiligen Absorptionsvorgang im Kreuzstrom zur Strömungsrichtung der Flüssigkeit zur Verfügung gestellt wird, als dies bei den weniger beweglichen Ionen (z. B. Hydroxylionen der Kathode) der Fall ist.

6. Verfahren nach mindestens einem der Ansprüche 1 bis 5, dadurch gekennzeichnet, daß zur Vermeidung eines Einschleppens von störenden Ionen (von den schleppenden entgegengesetzt geladenen Ionen) die Grenzschichten des letzten von der Flüssigkeit zu passierenden Verdrängungsvorganges (Absorptionsvorganges) eine größere Abschirmwirkung gegen die störenden Ionen als die restlichen Grenzschichten aufweisen.

7. Vorrichtung zum Durchführen des Verfahrens nach mindesten einem der Ansprüche 1 bis 6, bestehend aus mindestens einem Gefäß mit in diesem angeordneten Verdrängerkammern, wobei diese Kammern mit Zu- und Ableitungen für die Flüssigkeit ausgestattet sind, und das Gefäß mindestens eine Kammer für die Abscheidung der Sole aufweist, wobei die Verdrängerkammern (3, 4) für die zu behandelnde Flüssigkeit (5) als von Ionenaustauschermembranen (15, 16, 17, 18) als Grenzschichten gebildeten Kammern ausgeführt und diese Verdrängerkammern (3, 4) mit jeweils einer Ionenaustauschermasse (6, 7) aufgefüllt sind,

wobei jede Ionenaustauschermembran eine Durchlässigkeit für jeweils bestimmte Ionen aufweist, für gegensätzliche geladene Ionen wie auch Flüssigkeit hingegen undurchlässig ausgeführt ist,

wobei im Bereich der Verdrängerkammern Elektrodenkammern (20, 21) für in diese Kammern eingelegte Elektroden (22, 23) vorgesehen sind, von denen eine Elektrodenkammer (20) für die Anode (22) der mit einer Kationenaustauschermasse (6) gefüllten Verdrängerkammer (3) und eine Elektrodenkammer (21) für die Kathode (23) der mit einer Anionenaustauschermasse (7) gefüllten Verdrängerkammer (4) zugeordnet ist,

wobei für die Verdrängerkammer (3) für die Kationenaustauschermasse (6) kationendurchlässige Ionenaustauschermembranen (17, 18) und für die Verdrängerkammer (4) für die Anionenaustauschermasse (7) anionendurchlässige Ionenaustauschermembranen (15, 16) vorgesehen sind,

wobei zwischen der Verdrängerkammer (3) und der Verdrängerkammer (4) eine von den Ionenaustauschermembranen (16, 17) begrenzte Solekammer (19) vorgesehen ist **dadurch gekennzeichnet,**

daß neben den Verdrängerkammern mindestens eine Desorptionskammer (11) angeordnet ist,

daß die Desorptionskammer (11) mit alternierenden Schichten kationischer und anionischer Austauschermassen (12, 13) aufgefüllt ist,

daß der Desorptionkammer (11) eine Elektrodenkammer (27) mit eingelegter Kathode (28) zugeordnet ist,

daß die Elektrodenkammer (21) für die Anode (22) neben der Verdrängerkammer (3) mit der Kationenaustauschermasse (6) gleichzeitig der Desorptionskammer (11) zugeordnet ist,

wobei diese Kammern über die als Sperrschichten bzw. ionendurchlässig ausgeführten Ionenaustauschermembranen (24, 25, 29) allein ionendurchlässig miteinander verbunden sind,

daß für Desorptionskammer (11) kathodenseitig eine kationendurchlässige Ionenaustauschermembran (25) und anodenseitig eine anionendurchlässige Ionenaustauschermembran (25) vorgesehen ist

und daß zwischen der Anodenkammer (20) und der Desorptionskammer (11) eine weitere, von den Ionenaustauschermembranen (24, 29) begrenzte Solekammer (26) vorgesehen ist und daß diese Solekammer (26) mit ihrem Ablauf (39) mit dem Zulauf (49) der Kathodenkammer (27) und daß deren Ablauf (43) mit dem Zulauf (45) der Solekammer (19) über Verbindungsleitungen (41, 44) verbunden ist.

8. Vorrichtung nach Anspruch 7, dadurch gekennzeichnet, daß die Elektrodenkammern (20, 21, 27) Entgasungsmittel (49) für das Ableiten der Elektrolytgase aufweisen.

**Claims**

1. A method of treating liquids,

in particular desalinating aqueous solutions,

in the case of which the liquid is exposed sequentially to different absorption processes for cationic and anionic salt components,

in which respect in the region of the absorption processes of the liquids, or respectively of the ionogenic salt components dissolved in it, in anode and cathode chambers (20,21) separated from this region ions are produced and these are in each case in a respective cross-flow with regard to the liquid passing through the respective absorption process diffused into this,

in which respect for the diffusing or respectively moving of the ion steams through the absorption processes of the liquid an electrical voltage field, in particular in the form of a voltage potential, is applied,

and that these streams of ions on their way to the respective absorption process (displacement process) pass through a respective first membrane (15, 18) shielding this process against an electrode chamber, as well as an ion exchanger substance (6,7) introduced in the respective absorption process

and bring about in this substance an ion shifting (ion displacement) in such a way

that they convey the ions present in the respective absorption process out of the liquid phase in cross-flow to the direction of the liquid flow each to second membranes (16,17), of which the one membrane (16) separates the zone of the cation absorption and the other membrane (17) separates the zone of the anion absorption against a sol chamber common to the absorption processes from cation exchanger phase and anion exchanger phase,

and that these ions migrating from the liquid phase and the ion exchanger phase penetrate the respective membrane (16,17) separating the sol chamber (19) against the respective absorption process,

whereas these ions after reaching the sol chamber (19) are held back in the sol chamber (19) by the respective second membrane (16,17) shielding the absorption process alien to different ions and to these ions,

characterised

in that the liquid that is to be desalinated is subjected to a pretreatment for the partial desalination by means of electrical ion displacement (absorption)

and to an aftertreatment for the complete desalination by means of electrical desorption

and in that both treatments are combined into one process,

in which respect in the preliminary treatment the anions and cations produced in the electrode chambers (20,21) and the cross-flows formed by them are varied and limited by means of the electrical voltage potential and only a proportion of the ionogenic salt component of the liquid (5) that is to be desalinated is displaced into the sol chamber (19),

and in that the liquid that is to be desalinated still further is supplied to a desorption chamber (11), in which it is subjected anew in particular to desorption procedures,

in which respect this desorption chamber (11) is built up from alternating zones of stratified cation (12) and anion (13) exchanger substances,

in which the ionogenic salt components of the residual salt content of the liquid (5) that is to be treated are absorbed, and are desorbed by means of an electrical field which is produced between electrode chambers (20,27) and associated electrodes (22,28) in the form of a voltage potential,

in which respect the anode chamber (20), associated with the preliminary treatment, with associated anode (22) for the production of the displacer ion streams (30) is co-used as one of the electrode chambers

and forms with the desorption chamber (11) a sol chamber (26) lying therebetween and associated with the desorption chamber (11),

in which respect this anode chamber (20) is bounded with regard to the sol chamber (26) by a cation-pervious and anion-blocking membrane (29) and the sol chamber is bounded with regard to the desorption chamber (11) by an anion-pervious and cation-blocking membrane (24)

and in which respect at the anode (22) in the anode chamber (20) in addition to the displacer ion stream (9) a further ion stream (30) is produced

and this ion stream (30) is diffused through the cation-pervious membrane (29) into the sol chamber (26) associated with the desorption chamber (11)

and in which respect as second electrode chamber a cathode chamber (27) with associated cathode (28) is associated with the desorption chamber (11) and is demarcated from this by a cation-pervious and anion-blocking membrane (25) and in that a flushing liquid flows in series first of all through the sol chamber (26) associated with the desorption chamber, then through the cathode chamber (27) associated with the desorption zone and then through the central sol chamber (19) common to the absorption and desorption processes (displacer chambers) of the preliminary treatment,

and in this respect the ionogenic salt components stemming from the treated liquid are flushed both out of the region of the aftertreatment by desorption, and out of the region of the preliminary treatment by ion displacement absorption, in the form of a single common sol stream.

2. A method according to Claim 1 , characterised in that the degree of displacement of the cationic and anionic salt components present in the liquid and the ion exchanger substances is brought about by variation of an electrical voltage potential acting on the electrodes for the production of ions and of thereby released streams of ions transversely to the direction of the liquid flow, and in that this displacement is effected continuously.

3. A method according to Claim 2, characterised in that the degree of displacement of the cationic and anionic salt components present in the liquid and the ion exchanger substances is adjustable as a function of the amount of flow (throughput capacity per unit of time) of the liquid that is to be treated and of the concentrations or respectively the amount of sale of the ions present in this liquid, and of the residual concentration of the ions which is present in the treated liquid.

4. A method according to Claim 1, characterised in that the electrodes of the preliminary treatment stage and the electrodes of the aftertreatment stage are connected to a common current supply.

5. A method according to Claim 1, characterised in that, in particular for better utilisation of the streams of ions, a longer displacement path through the respective absorption procedure in cross-flow to the flow direction of the liquid is made available to the more mobile ions (e.g. hydrogen ions of the anode) produced by the electrodes than is the case with the less mobile ions (e.g. hydroxyl ions of the cathode).

6. A method according to at least one of Claims 1 to 5, characterised in that, to avoid drawing-in disturbing ions (ions charged oppositely to the attracted ones), the boundary layers of the last displacement process (absorption process) to be passed through by the liquid have a greater shielding effect against the disturbing ions than the remaining boundary layers.

7. A device for carrying out the method according to at least one of claims 1 to 6, consisting of at least one vessel with displacer chambers arranged therein,
in which respect these chambers are equipped with supply and drainage pipes for the liquid, and the vessel has at least one chamber for the precipitation of the sols, in which respect the displacer chambers (3,4) for the liquid (5) that is to be treated are designed as chambers formed by ion exchanger membranes (15,16,17,18) as boundary layers and these displacer chambers (3,4) are filled with in each case an ion exchange substance (6,7),
in which respect each ion exchanger membrane has a perviousness for respectively specific ions, but is impervious in execution for oppositely charged ions and liquid, in which respect provided in the region of the displacer chambers are electrode chambers (20,21) for electrodes (22,23) inserted into these chambers, of which one electrode chamber (20) for the anode (22) is associated with the displacer chamber (3) filled with a cation exchanger substance (6) and one electrode chamber (21) for the cathode (23) is associated with the displacer chamber (4) filled with an anion exchanger substance (7),
in which respect for the displacer chamber (3) for the cation exchanger substance (6) cation-pervious ion exchanger membranes (17,18) are provided and for the displacer chamber (4) for the anion exchanger substance (7) anion-pervious exchanger membranes (15,16) are provided
in which respect a sol chamber (19) which is bounded by the ion exchanger membranes (16,17) is provided between the displacer chamber (3) and the displacer chamber (4), characterised in that
next to the displacer chambers at least one desorption chamber (11) is arranged,
in that the desorption chamber (11) is filled with alternating layers of cationic and anionic exchanger substances (12,13),
in that an electrode chamber (27) with inserted cathode (28) is associated with the desorption chamber (11),
in that the electrode chamber (21) for the anode (22), besides being associated with the displacer chamber (3) for the cation exchanger substance (6), is at the same time associated with the desorption chamber (11),
in which respect these chambers are connected to one another in a solely ion-pervious manner by way of the ion exchanger membranes (24,25,29) designed as blocking layers or respectively in an ion-pervious manner,
in that for the desorption chamber (11) at the cathode-side a cation-pervious ion exchanger membrane (25) is provided and at the anode side an anion-pervious ion exchanger membrane (25) is provided
and in that a further sol chamber (26) bounded by the ion exchanger membranes (24,29) is provided between the anode chamber (20) and the desorption chamber (11) and in that this sol chamber (26) has its outlet (30) connected to the inlet (42) of the cathode chamber (27) and in that its outlet (43) is connected to the inlet (45) of the sol chamber (10) by way of connection pipes (41,44).

8. A device according to claim 7, characterised in that the electrode chambers (20,21,27) have degassing means (49) for leading off the electrolyte gases.

**Revendications**

1. Procédé pour traiter des liquides, notamment pour déminéraliser des solutions aqueuses, selon lequel le liquide est soumis successivement à différents processus d'absorption pour des composants salins cationiques et anioniques, des ions étant produits dans la région des processus d'absorption du liquide ou encore de ses composants salins ionogènes qui s'y trouvent dissous, dans des chambres d'anodes et de cathodes (20, 21) séparées dudit liquide, et ces ions étant respectivement introduits par diffusion dans ledit liquide en un courant croisé respectif (flux d'ions délogeurs) dirigé vers le liquide qui subit le processus d'absorption respectif, un champ électrique, en particulier sous la forme d'une intensité électrique étant établi pour faire diffuser ou encore déplacer les flux d'ions à travers les processus d'absorption du liquide, et ces flux d'ions traversant respectivement, sur leur trajet en direction du processus d'absorption respectif (processus de délogement), une première membrane (15, 18) qui séparer ce processus d'une chambre d'électrode, ainsi qu'une masse échangeuse d'ions (6, 7) introduite dans le processus d'absorption respectif, et provoquant au sein de cette masse un déplacement d'ions (délogement d'ions) de façon qu'ils transportent respectivement les ions qui se trouvent dans le processus d'absorption respectif, hors de la phase de liquide et de la phase échangeuse d'ions en courant croisé par rapport au sens de l'écoulement du liquide en direction de deuxièmes membranes (16, 17) respectives, dont l'une (16) sépare la zone d'absorption des cations et l'autre (17) sépare la zone d'absorption des anions d'une chambre de saumure commune aux processus d'absorption de la phase échangeuse de cations et de la phase échangeuse d'anions, et de façon que ces ions migrants de la phase de liquide et de la phase échangeuse d'ions traversent la membrane (16, 17) respective qui sépare la chambre de saumure (19) du processus d'absorption respectif, ces ions étant par contre retenus dans la chambre de saumure (19) par la deuxième membrane (16, 17) respective isolant le processus d'absorption d'autre nature et étranger à ces ions après avoir atteint la chambre de saumure (19), caractérisé en ce que le liquide à déminéraliser est soumis à un traitement préalable de déminéralisation partielle par délogement électrique des ions (absorption), et à un traitement ultérieur de déminéralisation totale par désorption électrique, en ce que ces deux traitements sont réunis en un procédé, les anions et cations produits dans les chambres d'électrodes (20, 21) et les flux croisés qu'ils constituent étant variés et limités au cours du traitement préalable au moyen de l'intensité électrique et seule une fraction des composants salins ionogènes du liquide à déminéraliser (5) étant refoulée dans la chambre de saumure (19), en ce que le liquide restant encore à déminéraliser est amené à une chambre de désorption (11), dans laquelle il est à nouveau soumis notamment à des processus de désorption, cette chambre de désorption (11) étant composée de zones alternées de masses échangeuses de cations (12) et d'anions (13) disposées en couches, dans lesquelles les composants salins ionogènes de la teneur en sels résiduels du liquide (5) à traiter sont absorbés et désorbés à l'aide d'un champ électrique établi sous la forme d'une intensité électrique entre les chambres d'électrodes (20, 27) et les électrodes (22, 28) qui leurs sont associées, la chambre d'anode (20), à laquelle est adjointe l'anode (22), qui est associée au traitement préalable étant parallèlement exploitée en tant que l'une des chambres d'électrodes et formant avec la chambre de désorption (11) une chambre de saumure (26) intermédiaire, associée à la chambre de désorption (11), cette chambre d'anode (20) étant délimitée, en direction de la chambre de saumure (26), par une membrane (29) perméable aux cations et barrant le passage aux anions, et la chambre de saumure étant délimitée, en direction de la chambre de désorption (11), par une membrane (24) perméable aux anions et barrant le passage aux cations, et un autre flux d'ions (30) étant produit à l'anode (22) dans la chambre d'anode (20) en plus du flux d'ions délogeurs (9) et ce flux d'ions (30) étant introduit par diffusion dans la chambre de saumure (26) associée à la chambre de désorption (11) à travers la membrane perméable aux cations et une chambre de cathode (27), à laquelle est adjointe la cathode (28), étant associée en tant que seconde chambre d'électrode à la chambre de désorption (11) et délimitée de celle-ci par une membrane (25) perméable aux cations et barrant le passage aux anions, et en ce qu'un liquide de rinçage traverse d'affilée d'abord la chambre de saumure (26) associée à la chambre de désorption, puis la chambre de cathode (27) associée à la zone de désorption et ensuite la chambre de saumure (19) centrale commune aux processus d'absorption et de désorption (chambres de réaction), les composants salins ionogènes issus du liquide à traiter étant alors éliminés par rinçage sous forme d'un seul flux de saumure commun, tant de la région du traitement ultérieur, par désorption, que de la région du traitement préalable, par délogement d'ions (absorption).

2. Procédé selon la revendication 1, caractérisé en ce que le degré de délogement des composants salins cationiques et anioniques qui se trouvent dans le liquide et les masses échangeuses d'ions est obtenu en faisant varier une intensité de courant qui agit sur les électrodes et en faisant varier des flux d'ions ainsi déclenchés perpendiculairement à la direction d'écoulement du liquide, et en ce que délogement s'effectue en continu.

3. Procédé selon la revendication 2, caractérisé en ce que le degré de délogement des composants salins cationiques et anioniques qui se trouvent dans le liquide et les masses échangeuses d'ions peut être régulé en fonction de la quantité d'écoulement (débit par unité de temps) du liquide à traiter et de la concentration des ions qui se trouvent dans ce liquide ou encore de la quantité de sel, ainsi qu'en fonction de la concentration résiduelle d'ions présente dans le liquide traité.

4. Procédé selon la revendication 1, caractérisé en ce que les électrodes de l'étape de traitement préalable et les électrodes de l'étape de traitement ultérieur sont raccordées à une alimentation en courant électrique commune.

5. Procédé selon la revendication 1, caractérisé en ce qu'afin notamment de mieux exploiter les flux d'ions, on a prévu un trajet de délogement en flux croisé par rapport à la direction d'écoulement du liquide, plus long à parcourir à travers le processus d'absorption respectif pour les ions plus mobiles, produits par les électrodes (par ex. ions d'hydrogène de l'anode), que pour les ions moins mobiles (par ex. ions hydroxyles de la cathode).

6. Procédé selon au moins l'une des revendications 1 à 5, caractérisé en ce qu'afin d'éviter une introduction par entraînement d'ions parasites (ions de charge opposée à celle des ions entraînants), les couches séparatrices du dernier processus d'absorption que doit subir le liquide présentent un plus grand effet d'écran vis-à-vis des ions parasites que les autres couches séparatrices.

7. Dispositif pour la mise en oeuvre du procédé selon au moins l'une des revendications 1 à 6, constitué d'au moins un récipient comprenant différentes chambres de réaction, ces chambres étant équipées de conduites d'alimentation et d'évacuation pour le liquide, et le récipient présentant au moins une chambre pour la séparation de la saumure, les chambres de réaction (3, 4) pour le liquide (5) à traiter étant réalisées sous la forme de chambres constituées par des membranes échangeuses d'ions (15, 16, 17, 18) en tant que couches séparatrices et ces chambres de réaction étant remplies d'une masse échangeuse d'ions (6, 7) respective, chaque membrane échangeuse d'ions étant perméable à des ions déterminés respectifs mais étant imperméable aux ions de charge opposée ainsi qu'au liquide, des chambres d'électrodes (20, 21), dans lesquelles sont installées des électrodes (22, 23) étant prévues dans la région de ces chambres de réaction, une chambre d'électrode (20) pour l'anode (34) étant associée à une chambre de réaction (3) remplie d'une masse échangeuse de cations (6) et une chambre d'électrode (21) pour la cathode (23) étant associée à une chambre de réaction (4) remplie d'une masse échangeuse d'anions (7), des membranes échangeuses d'ions (17, 18) perméables aux cations étant prévues pour la chambre de réaction (3) pour la masse échangeuse de cations (6) et des membranes échangeuses d'ions (15, 16) perméables aux anions étant prévues pour la chambre de réaction (4) pour la masse échangeuse d'anions (7), une chambre de saumure (19) délimitée par les membranes échangeuses d'ions (16, 17) étant prévue entre la chambre de réaction (3) et la chambre de réaction (4), caractérisé en ce que au moins une chambre de désorption (11) est agencée à côté des chambres de réaction, en ce que ladite chambre de désorption (11) est remplie de couches alternées de masses échangeuses cationiques et anioniques (12, 13), en ce qu'une chambre d'électrode (27), dans laquelle est installée une électrode (28) est associée à la chambre de désorption (11), en ce que la chambre d'électrode (21) pour l'anode (22) située à côté de la chambre de réaction (3) contenant la masse échangeuse de cations (6) est simultanément associée à la chambre de désorption (11), ces chambres étant mutuellement reliées, uniquement pour laisser passer les ions, par l'intermédiaire de membranes échangeuses d'ions (24, 25, 29) conçues comme couches de barrage ou encore pour laisser passer les ions, en ce qu'une membrane échangeuse d'ions (25) perméable aux cations est prévue côté cathode et une membrane échangeuse d'ions (25) perméable aux anions est prévue côté anode,

en ce qu'entre la chambre d'anode (20) et la chambre de désorption (11) une autre chambre de saumure (26) délimitée par les membranes échangeuses d'ions (24, 29) est prévue, en ce que cette chambre de saumure (26) est raccordée par son évacuation (39) à l'alimentation (49) de la chambre de cathode (27),
et en ce que son évacuation (43) est raccordée à l'alimentation (45) de la chambre de saumure (19) par l'intermédiaire de canalisations de raccordement (41, 44).

8. Dispositif selon la revendication 7, caractérisé en ce les chambres d'électrodes (20, 21, 27) présentent des moyens d'extraction de gaz (49) pour l'évacuation des gaz électrolytiques.

Fig.1

Fig.2